(19) Europäisches Patentamt
European Patent Office
Office européen des brevets

(11) EP 4 653 512 A1

(12) **EUROPEAN PATENT APPLICATION**
published in accordance with Art. 153(4) EPC

(43) Date of publication:
**26.11.2025 Bulletin 2025/48**

(21) Application number: **23917868.4**

(22) Date of filing: **10.11.2023**

(51) International Patent Classification (IPC):
***C09K 21/12*** *(2006.01)* ***C08K 5/5313*** *(2006.01)*
***C08K 5/00*** *(2006.01)* ***C08L 67/02*** *(2006.01)*
***C08L 77/06*** *(2006.01)* ***C09J 11/06*** *(2006.01)*

(52) Cooperative Patent Classification (CPC):
**C08K 5/00; C08K 5/5313; C08L 67/02; C08L 77/06; C09J 11/06; C09K 21/12**

(86) International application number:
**PCT/KR2023/018080**

(87) International publication number:
**WO 2024/154915 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.01.2023 KR 20230007197**

(71) Applicant: **Universal Chemtech Co., Ltd.**
**Nonsan-si, Chungcheongnam-do 32925 (KR)**

(72) Inventors:
- **OH, Se-saeng**
  **Daejeon 34120 (KR)**
- **CHA, Jae-seung**
  **Nonsan-si Chungcheongnam-do 32991 (KR)**
- **YUN, Se-young**
  **Sejong 30062 (KR)**
- **JE, Seon-hee**
  **Nonsan-si Chungcheongnam-do 32925 (KR)**

(74) Representative: **Mathys & Squire**
**Theatinerstraße 8**
**80333 München (DE)**

# (54) ALKYL HYPOPHOSPHOROUS ACID-BASED FLAME RETARDANT HAVING CONTROLLED PARTICLE SIZE, AND METHOD FOR MANUFACTURING SAME

(57) The present invention relates to a hypophosphorous acid-based flame retardant and a method for manufacturing same, the method for manufacturing a hypophosphorous acid-based flame retardant having a controlled particle size due to divalent to tetravalent metal salt supplied through a nozzle. The hypophosphorous acid-based flame retardant having a controlled particle size according to the present invention can provide excellent flame retardancy to adhesive compositions requiring thinness without harming the physical properties of a product or flame retardant compositions requiring heat resistance.

【FIG. 2】

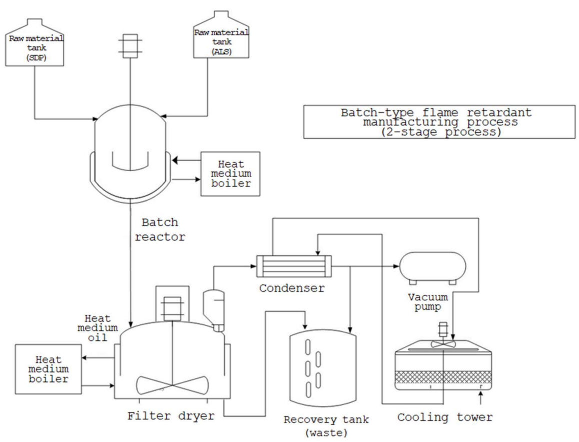


EP 4 653 512 A1

## Description

[Technical Field]

The present invention relates to a hypophosphorous acid-based flame retardant and a method for manufacturing the same, and in particular, to a method for manufacturing a hypophosphorous acid-based flame retardant having a controlled particle size, the method including supplying at least one raw material of a metal alkyl hypophosphite and a divalent to tetravalent metal salt through a nozzle, and a hypophosphorous acid-based flame retardant having a controlled particle size manufactured thereby.

Polymer materials play an important role in human life. However, since most thermoplastic polymer materials are flammable and have a risk of fire, a need for flame retardation has long been recognized. Conventionally, flame retardation was carried out with a halogen-based compound containing bromine or chlorine, which has excellent flame retardancy and heat resistance. Halogen-based flame retardants are still widely used because of their excellent flame retardancy, but the halogen-based flame retardants are toxic to the human body and the environment because they produce combustion toxic gases and dioxins. Accordingly, starting with Europe, as regulations on the use of halogen flame retardants are being strengthened, there is an urgent need to develop a flame retardant that may meet the performance of the halogen flame retardant.

A phosphorus-based compound is attracting attention as a substitute for the halogen flame retardant and is being actively studied, but it has limitations in that its flame retardancy and heat resistance are significantly inferior to those of the halogen-based compound.

In addition, a flame retardant should have excellent flame retardancy and heat resistance, and depending on the purpose and use environment, a particle size of the flame retardant may play a significantly important role. For example, since an adhesive used in a flexible flat cable (FFC), which is a type of electronic material, usually has a thickness of 30 μm or less, it is difficult to use a flame retardant having a large particle size. On the other hand, in a case where a flame retardant is mixed and used with a material of a component such as an electronic component or an automobile component, when a particle size of the flame retardant used is small, a bridge is formed in a feeding hopper due to a light bulk density, and smooth feeding is not performed, which leads to a defective product.

In order to provide a flame retardant having a suitable particle size according to the purpose, various particle size control methods have been proposed, and for example, a method for controlling a particle size of a hypophosphorous acid-based flame retardant to be small using ultrasonic waves has been proposed. However, the flame retardant manufactured using such a particle size control method is suitable for the adhesive field because it has a particle size that is too small, but has a problem when used as a compound, which limits its application fields.

Therefore, there is a need to develop a flame retardant that may substitute for a halogen-based flame retardant and provide excellent flame retardancy in various fields since its particle size is easily controlled in various sizes.

[Related Art Documents]

[Patent Documents]

Korean Patent Publication No. 10-2095283
Korean Patent Laid-Open Publication No. 10-2019-0055821

[Background Art]

An object of the present invention is to provide a hypophosphorous acid-based flame retardant having a controlled particle size distribution so as to provide excellent flame retardancy to a product for each use without impairing physical properties of a product containing the flame retardant.

Another object of the present invention is to provide a hypophosphorous acid-based flame retardant that is advantageous for each use of an adhesive composition requiring thinness or a flame retardant composition requiring heat resistance.

Still another object of the present invention is to provide a method for manufacturing a hypophosphorous acid-based flame retardant having excellent flame retardancy in a simple and economical manner.

**[Disclosure]**

[Technical Problem]

In one general aspect, there is provided a hypophosphorous acid-based flame retardant satisfying the following Expressions 1 and 2 and represented by the following Chemical Formula 1.

$$[\text{Expression 1}]\ 0.1 < D_{50}/(D_{98}-D_{50}) < 0.6$$

$$[\text{Expression 2}]\ 250°C < T_{CG} < 320°C$$

[Chemical Formula 1]

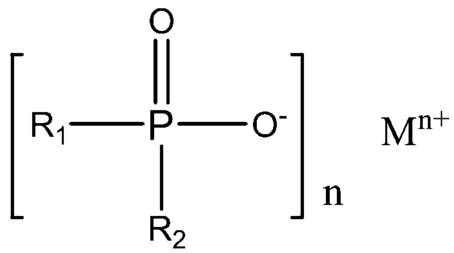

In Expression 1, when measured by a laser diffraction scattering method, $D_{50}$ is a particle diameter corresponding to 50% of a cumulative volume of a particle size distribution, and $D_{98}$ is a particle diameter corresponding to 98% of the cumulative volume of the particle size distribution.

In Expression 2, TCG represents a temperature at which a weight loss of 1.0% appears first under thermogravimetric analysis conditions of a heating rate of 10°C/min and a nitrogen flow rate of 20 ml/min.

In Chemical Formula 1, $R_1$ and $R_2$ are hydrogen or linear or branched ($C_1$-$C_6$) alkyl independently of each other, M is a metal atom of Ca, Mg, Al, Zn, or Ti, and n represents an integer selected from 2 to 4.

In an aspect of the present invention, the hypophosphorous acid-based flame retardant may satisfy the following Expression 3.

$$[\text{Expression 3}]\ 0.1 < D_{50}/(D_{98}-D_{50}) < 0.3$$

In Expression 3, when measured by a laser diffraction scattering method, $D_{50}$ is a particle diameter corresponding to 50% of a cumulative volume of a particle size distribution, and $D_{98}$ is a particle diameter corresponding to 98% of the cumulative volume of the particle size distribution.

In an aspect of the present invention, the hypophosphorous acid-based flame retardant may satisfy the following Expressions 5 and 6.

[Expression 5]

$$0.35 < D_{50}/(D_{98}-D_{50}) < 0.6$$

[Expression 6]

$$290°C < T_{CG} < 320°C$$

In Expression 5, when measured by a laser diffraction scattering method, $D_{50}$ is a particle diameter corresponding to 50% of a cumulative volume of a particle size distribution, and $D_{98}$ is a particle diameter corresponding to 98% of the cumulative volume of the particle size distribution.

In Expression 6, $T_{CG}$ represents a temperature at which a weight loss of 1.0% appears first under thermogravimetric analysis conditions of a heating rate of 10°C/min and a nitrogen flow rate of 20 ml/min.

In an aspect of the present invention, $D_{50}$ of the flame retardant may be 30 μm or less.

In an aspect of the present invention, $D_{98}$ of the flame retardant may be 100 μm or less.

In another general aspect, a method for manufacturing a hypophosphorous acid-based flame retardant includes: a) preparing a metal alkyl hypophosphite by stirring an alkali metal hypophosphite, ($C_2$-$C_4$) alkene, a radical initiator, and water; b) preparing a hypophosphorous acid-based metal salt by reacting the metal alkyl hypophosphite prepared in step

a) with a divalent to tetravalent metal salt; c) washing the hypophosphorous acid-based metal salt prepared in step b) with distilled water; and d) drying the hypophosphorous acid-based metal salt washed with water in step c) under vacuum conditions to manufacture a hypophosphorous acid-based flame retardant represented by the following Chemical Formula 1, wherein in step b), at least one raw material of the metal alkyl hypophosphite and the divalent to tetravalent metal salt is supplied through a nozzle.

[Chemical Formula 1]

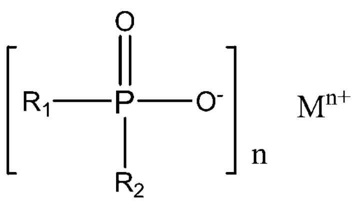

In Chemical Formula 1, $R_1$ and $R_2$ are hydrogen or linear or branched ($C_1$-$C_6$) alkyl independently of each other, M is a metal atom of Ca, Mg, Al, Zn, or Ti, and n represents an integer selected from 2 to 4.

In an aspect of the present invention, in the method for manufacturing a hypophosphorous acid-based flame retardant, the nozzle may be a straight nozzle, a full cone nozzle, or a fog nozzle.

In an aspect of the present invention, in the method for manufacturing a hypophosphorous acid-based flame retardant, the raw material may be supplied through the straight nozzle, and the flame retardant may satisfy the following Expression 3.

$$[\text{Expression 3}]\ 0.1 < D_{50}/(D_{98}-D_{50}) < 0.3$$

In Expression 3, when measured by a laser diffraction scattering method, $D_{50}$ is a particle diameter corresponding to 50% of a cumulative volume of a particle size distribution, and $D_{98}$ is a particle diameter corresponding to 98% of the cumulative volume of the particle size distribution.

In an aspect of the present invention, in the method for manufacturing a hypophosphorous acid-based flame retardant, the raw material may be supplied through the full cone nozzle or the fog nozzle, and the flame retardant may satisfy the following Expressions 5 and 6.

$$[\text{Expression 5}]\ 0.35 < D_{50}/(D_{98}-D_{50}) < 0.6$$

$$[\text{Expression 6}]\ 290°C < T_{CG} < 320°C$$

In Expression 5, when measured by a laser diffraction scattering method, $D_{50}$ is a particle diameter corresponding to 50% of a cumulative volume of a particle size distribution, and $D_{98}$ is a particle diameter corresponding to 98% of the cumulative volume of the particle size distribution.

In Expression 6, $T_{CG}$ represents a temperature at which a weight loss of 1.0% appears first under thermogravimetric analysis conditions of a heating rate of 10°C/min and a nitrogen flow rate of 20 ml/min.

In an aspect of the present invention, in the method for manufacturing a hypophosphorous acid-based flame retardant, the divalent to tetravalent metal salt may be hydrochloride, sulfate, or nitrate of a divalent to tetravalent metal.

In an aspect of the present invention, in the method for manufacturing a hypophosphorous acid-based flame retardant, a reaction temperature in step b) may be 60°C or lower.

In still another general aspect, an adhesive composition contains the hypophosphorous acid-based flame retardant described above and an adhesive polymer, wherein the hypophosphorous acid-based flame retardant satisfies the following Expression 3.

$$[\text{Expression 3}]\ 0.1 < D_{50}/(D_{98}-D_{50}) < 0.3$$

In Expression 3, when measured by a laser diffraction scattering method, $D_{50}$ is a particle diameter corresponding to 50% of a cumulative volume of a particle size distribution, and $D_{98}$ is a particle diameter corresponding to 98% of the cumulative volume of the particle size distribution.

In an aspect of the present invention, the adhesive composition may be used for a copper clad laminate (CCL) or a flexible flat cable (FFC).

In still another general aspect, a flame retardant composition contains the hypophosphorous acid-based flame retardant described above and a resin, wherein the flame retardant satisfies the following Expressions 5 and 6.

$$\text{[Expression 5]}\ 0.35 < D_{50}/(D_{98}-D_{50}) < 0.6$$

$$\text{[Expression 6]}\ 290°C < T_{CG} < 320°C$$

In Expression 5, when measured by a laser diffraction scattering method, $D_{50}$ is a particle diameter corresponding to 50% of a cumulative volume of a particle size distribution, and $D_{98}$ is a particle diameter corresponding to 98% of the cumulative volume of the particle size distribution.

In Expression 6, $T_{CG}$ represents a temperature at which a weight loss of 1.0% appears first under thermogravimetric analysis conditions of a heating rate of 10°C/min and a nitrogen flow rate of 20 ml/min.

In an aspect of the present invention, the resin may be polybutylene terephthalate, polyethylene terephthalate, polyphthalamide, or nylon 6,6.

[Technical Solution]

The hypophosphorous acid-based flame retardant having a controlled particle size according to the present invention may provide excellent flame retardancy to an adhesive composition requiring thinness or a flame retardant composition requiring heat resistance without impairing the physical properties of a product.

The method for manufacturing a hypophosphorous acid-based flame retardant according to the present invention allows for easy control of a particle size of a hypophosphorous acid-based flame retardant, and may manufacture a hypophosphorous acid-based metal salt flame retardant having excellent flame retardancy in a simple and economical manner.

In the present invention, since an organic solvent such as acetic acid is not used, it is possible to solve the problem of corrosion of a reactor and the problem of an unpleasant odor caused by a residual organic solvent such as acetic acid in a product.

[Description of Drawings]

FIG. 1 illustrates $^1$H NMR measurement results of sodium diethylphosphinate (SDP) prepared according to a preparation example of the present invention (600 MHz, $D_2O$ solvent).

FIG. 2 is a schematic diagram of a batch reactor used in a manufacturing method of the present invention.

FIG. 3 is a schematic diagram of a continuous reactor used in a manufacturing method of the present invention.

[Best Mode]

Hereinafter, the present invention will be described in more detail with reference to examples, but the present invention is not limited by the following embodiments. In describing the present invention, detailed descriptions of related known functions or configurations are omitted in order to avoid obscuring the gist of the present invention.

While embodiments according to the concept of the present invention may have various changes and may have various forms, it should be understood that the embodiments according to the concept of the present invention are not intended to limit the specific embodiments, but include all changes, equivalents, or alternatives included in the spirit and technical scope of the present invention.

Unless otherwise defined in the present invention, all the technical terms and scientific terms have the meanings as commonly understood by those skilled in the art to which the present invention pertains. The terms used in the description of the present invention are merely used to effectively describe a specific embodiment, but are not intended to limit the present invention.

In addition, unless explicitly described to the contrary, "comprising" any components will be understood to imply further inclusion of other components rather than the exclusion of any other components. In addition, unless the context clearly indicates otherwise, singular forms are intended to include plural forms.

Hereinafter, a unit used without special mention is based on a weight, and as an example, a unit of % or a ratio refers to wt% or a weight ratio.

In addition, in describing components of the present invention, the terms such as first, second, (A), (B), (a), (b), and the like may be used. These terms are merely used to distinguish one component from other component, and do not limit the substance, order, or sequence of the component.

The present inventors have found that a particle size is a significantly important factor depending on the flame retardancy improvement and the purpose and use environment of the flame retardant, and have conducted repeated studies to solve these problems, and as a result, the present inventors have discovered that a hypophosphorous acid-based flame retardant having a controlled particle size may provide excellent flame retardancy to an adhesive composition requiring thinness or a composition requiring heat resistance, and a hypophosphorous acid-based metal salt flame retardant having these advantages may be manufactured in a simple and economical manner, thereby completing the present invention.

Hereinafter, a hypophosphorous acid-based flame retardant according to the present invention and a method for manufacturing the same will be described in detail.

The hypophosphorous acid-based flame retardant according to the present invention is a hypophosphorous acid-based flame retardant satisfying the following Expressions 1 and 2 and represented by the following Chemical Formula 1.

[Expression 1] $0.1 < D_{50}/(D_{98}-D_{50}) < 0.6$

[Expression 2] $250°C < T_{CG} < 320°C$

[Chemical Formula 1]

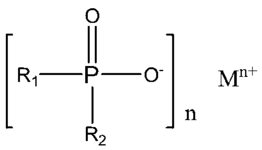

In Expression 1, when measured by a laser diffraction scattering method, $D_{50}$ is a particle diameter corresponding to 50% of a cumulative volume of a particle size distribution, and $D_{98}$ is a particle diameter corresponding to 98% of the cumulative volume of the particle size distribution.

In Expression 2, TCG represents a temperature at which a weight loss of 1.0% appears first under thermogravimetric analysis conditions of a heating rate of 10°C/min and a nitrogen flow rate of 20 ml/min.

In Chemical Formula 1, $R_1$ and $R_2$ are hydrogen or linear or branched ($C_1$-$C_6$) alkyl independently of each other, M is a metal atom of Ca, Mg, Al, Zn, or Ti, and n represents an integer selected from 2 to 4.

Specifically, $R_1$ and $R_2$ may each independently be ($C_1$-$C_3$) alkyl, M may be an Al metal atom in terms of ease of particle size control and heat resistance, and n may be 2 to 3.

Expression 1 represents the particle size distribution width of the hypophosphorous acid-based flame retardant, and the particle size distribution width ($D_{50}/(D_{98}-D_{50})$) satisfies more than 0.1 and less than 0.6. Preferably, the particle size distribution width ($D_{50}/(D_{98}-D_{50})$) may be 0.19 or more and 0.58 or less. In this case, the flame retardant may have D50 of 30 μm or less and D98 of 100 μm or less, and specifically, D50 of 29 μm or less and D98 of 80 μm or less, and may have, but not limited to, D50 of 1 μm or more and D98 of 12 μm or more. As D50 of the flame retardant is larger, the heat resistance of the flame retardant may be improved, but when D50 of the flame retardant is outside the above range, it may not be suitable for the intended use.

Expression 2 represents the heat stability of the hypophosphorous acid-based flame retardant, $T_{CG}$ satisfies a temperature of higher than 250°C and lower than 320°C, and preferably, may be 255°C or higher and 315°C or lower.

A hypophosphorous acid-based flame retardant satisfying Expressions 1 and 2 may provide excellent flame retardancy to an adhesive composition requiring thinness or a composition requiring heat resistance without impairing the physical properties of the product due to the controlled particle size.

In an embodiment, the hypophosphorous acid-based flame retardant according to the present invention may satisfy Expressions 3 and 4.

[Expression 3] $0.1 < D_{50}/(D_{98}-D_{50}) < 0.3$

$$[\text{Expression 4}]\ 250°C < T_{CG} < 280°C$$

Since $D_{50}$, $D_{98}$, and $T_{CG}$ in Expressions 3 and 4 have the same meanings as those described in Expressions 1 and 2, detailed descriptions are omitted.

Since Expressions 3 and 4 are satisfied, the particle size may be controlled to be suitable for an adhesive composition requiring thinness, which may be advantageous in improving the heat stability of the adhesive composition. In addition, since the flame retardant has a small average particle size and excellent heat stability, the flame retardant may provide flame retardancy required for an adhesive without impairing the physical properties of the adhesive even when the flame retardant is contained in a product requiring thinness, such as an adhesive for a copper clad laminate (CCL) or a flexible flat cable (FFC).

The hypophosphorous acid-based flame retardant satisfying Expressions 3 and 4 may have $D_{50}$ of 6 μm or less and $D_{98}$ of 35 μm or less, or $D_{50}$ of 5.5 μm or less and $D_{98}$ of 33 μm or less, and may have, but not limited to, $D_{50}$ of 1 μm or more and $D_{98}$ of 12 μm or more, or $D_{50}$ of 2.5 μm or more and $D_{98}$ of 15 μm or more. Specifically, $D_{50}$ may be 1 to 6 μm or 2.5 to 5.5 μm, and $D_{98}$ may be 12 to 35 μm or 15 to 33 μm.

In an embodiment, the hypophosphorous acid-based flame retardant represented by Chemical Formula 1 according to the present invention may satisfy Expressions 5 and 6.

$$[\text{Expression 5}]\ 0.35 < D_{50}/(D_{98}-D_{50}) < 0.6$$

$$[\text{Expression 6}]\ 290°C < T_{CG} < 320°C$$

Since the particle size of the hypophosphorous acid-based flame retardant satisfying Expressions 5 and 6 is controlled to be large, the hypophosphorous acid-based flame retardant has excellent flowability during a processing process, making it easy to process, and is easily crushed when mixed with a resin, thereby exhibiting excellent dispersibility. Surprisingly, Expression 5 is satisfied, such that the heat resistance is significantly improved, enabling high-temperature processing of the resin and suppressing the occurrence of a bridge in a hopper. Accordingly, a hypophosphorous acid-based flame retardant satisfying Expressions 5 and 6 may be mixed with a resin having a high decomposition temperature to improve the heat resistance of the resin. The resin having a high decomposition temperature may be polyester or polyamide, and specific examples thereof include, but are not limited to, polybutylene terephthalate, polyethylene terephthalate, polyphthalamide, or nylon 6,6.

The hypophosphorous acid-based flame retardant satisfying Expressions 5 and 6 may have $D_{50}$ of 10 μm or more and $D_{98}$ of 40 μm or more, or $D_{50}$ of 13 μm or more and $D_{98}$ of 48 μm or more, and may have, but not limited to, $D_{50}$ of 32 μm or less and $D_{98}$ of 100 μm or less, or $D_{50}$ of 30 μm or less and $D_{98}$ of 80 μm or less. Specifically, $D_{50}$ may be 10 to 32 μm, 13 to 30 μm, or 23 to 30 μm, and $D_{98}$ may be 40 to 100 μm, 48 to 80 μm, or 70 to 80 μm.

A method for manufacturing a hypophosphorous acid-based flame retardant according to an aspect of the present invention includes: a) preparing a metal alkyl hypophosphite by stirring an alkali metal hypophosphite, ($C_2$-$C_4$) alkene, a radical initiator, and water; b) preparing a hypophosphorous acid-based metal salt by reacting the metal alkyl hypophosphite prepared in step a) with a divalent to tetravalent metal salt; c) washing the hypophosphorous acid-based metal salt prepared in step b) with distilled water; and d) drying the hypophosphorous acid-based metal salt washed with water in step c) under vacuum conditions to manufacture a hypophosphorous acid-based flame retardant represented by the following Chemical Formula 1, wherein in step b), at least one raw material of the metal alkyl hypophosphite and the divalent to tetravalent metal salt is supplied through a nozzle.

[Chemical Formula 1]

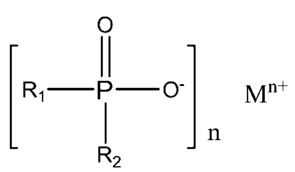

In Chemical Formula 1, $R_1$ and $R_2$ are hydrogen or linear or branched ($C_1$-$C_6$) alkyl independently of each other, M is a metal atom of Ca, Mg, Al, Zn, or Ti, and n represents an integer selected from 2 to 4.

When manufacturing a hypophosphorous acid-based flame retardant using hypophosphorous acid and metal hydroxide, it is difficult to use a method other than crushing to control a particle size because aluminum hydroxide, which is commonly used in manufacturing a flame retardant, is almost insoluble in water, and furthermore, manufacture of a flame retardant having a large particle size is impossible in principle.

In another common method for manufacturing a hypophosphorous acid-based flame retardant, an alkali metal hypophosphite is prepared using hypophosphorous acid and an alkali metal hydroxide, and then reacted with a divalent to tetravalent metal salt. When the hypophosphorous acid is used as a raw material, it is imperative that a step of reacting alkyl hypophosphorous acid, which is an intermediate, with a metal hydroxide salt, is performed. When the metal hydroxide salt used in this step is not used in an exact ratio, a decrease in yield may occur or a divalent to tetravalent metal hydroxide salt that is insoluble in water may be generated, which may remain as impurities and interfere with filtration, thereby increasing the amount of residual reaction by-products in a finally produced flame retardant. Reaction by-products that are not completely removed and remain in the flame retardant may deteriorate the flame retardancy and heat resistance of the flame retardant.

However, in the present invention, since an alkali metal hypophosphite is used as a raw material instead of hypophosphorous acid in step a), the step of reacting with a metal hydroxide salt may be omitted, and the amount of energy and water used in the manufacturing process may be reduced. In addition, since the manufacturing method according to the present invention does not include a step of reacting with a metal hydroxide salt, when a composition containing a hypophosphorous acid-based flame retardant and a resin or a hypophosphorous acid-based flame retardant and an adhesive polymer is subjected to molding processing, water is not generated due to the metal hydroxide salt having a low dehydration temperature, such that product defects may be prevented in advance. In addition, the manufacturing method of the present invention has the advantage of easily controlling the particle size of the flame retardant since an alkali metal hypophosphite is used as a raw material. The alkali metal hypophosphite may be sodium hypophosphite or potassium hypophosphite. A concentration of the alkali metal hypophosphite may be 5 to 70 wt%, more preferably 10 to 60 wt%, still more preferably 20 to 50 wt%, and most preferably 30 to 40 wt% of the total amount of the alkali metal hypophosphite, ($C_2$-$C_4$) alkene, radical initiator, and water used in step a), and the reaction efficiency may be excellent within this range.

In addition, the ($C_2$-$C_4$) alkene may be one or more selected from alkenes having 2 to 4 carbon atoms, specifically, ethylene, propene, 1-butene, or 2-butene, and is preferably ethylene in terms of improving flame retardancy.

The radical initiator is not limited, and specifically, for example, one or a mixture of two or more selected from the group consisting of 2,2-azobis(2-amidinopropane) dihydrochloride, sodium persulfate, potassium persulfate, and ammonium persulfate may be used. A content of the radical initiator used is preferably 0.5 to 15 mol% and more preferably 1 to 10 mol% with respect to the alkali metal hypophosphite in terms of a reaction rate and economic feasibility.

The water may refer to distilled water or deionized water.

In step a), a reaction temperature may be maintained at 50 to 150°C, and a reaction pressure may be maintained at 5 to 10 atm.

Step b) is a step of substituting the metal of the metal alkyl hypophosphite with a divalent to tetravalent metal. For example, the following substitution reaction may occur.

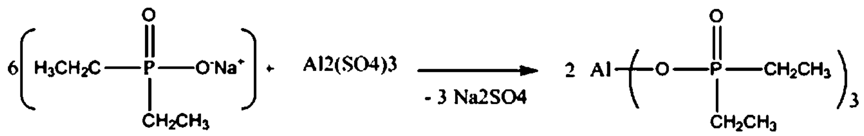


The heat resistance and water resistance of the flame retardant may be improved through step b).

The divalent to tetravalent metal salt may be nitrate, hydrochloride, or sulfate of a divalent to tetravalent metal, and the divalent to tetravalent metal may be calcium (Ca), magnesium (Mg), aluminum (Al), zinc (Zn), titanium (Ti), or the like. Considering the improved heat resistance and water resistance of the flame retardant and the low price without containing a halogen element, it may be advantageous to use aluminum sulfate as a divalent to tetravalent metal salt.

It is preferable that the amount of the divalent to tetravalent metal salt is added at 3 mol times or more, more preferably 4 to 8 mol times, and still more preferably 5 to 7 mol times, based on 1 mol of the metal alkyl hypophosphite. When the above range is satisfied, there is an advantage in that no unreacted product that is not substituted with the divalent to tetravalent metal salt remains.

A reaction temperature in step b) may be room temperature, specifically 20 to 50°C, and preferably 25 to 45°C. When the reaction proceeds within the above temperature range, a change in particle size of a finally produced flame retardant may not be large.

In step b), at least one raw material of the metal alkyl hypophosphite and the divalent to tetravalent metal salt is supplied to a reactor through a nozzle, and the nozzle may be a straight nozzle, a full cone nozzle, or a fog nozzle. The number of nozzles that are loaded into the reactor and supply a reactant may be 1 to 50, specifically 2 to 30, but is not limited thereto.

The method for manufacturing a hypophosphorous acid-based flame retardant may be performed by a batch or continuous reaction.

According to an embodiment, in the batch reaction, when at least one raw material of the metal alkyl hypophosphite and the divalent to tetravalent metal salt is sprayed through a nozzle in step b), a hypophosphorous acid-based

flame retardant may be manufactured by spraying one of the two raw materials loaded into the reactor to the other raw material.

According to an embodiment, in the continuous reaction, at least one raw material of the metal alkyl hypophosphite and the divalent to tetravalent metal salt in step b) is continuously sprayed into a reactor through a nozzle, and at the same time, a metal alkyl hypophosphite solution is continuously sprayed through the nozzle, such that a hypophosphorous acid-based flame retardant may be manufactured in the reactor through a reaction between the sprayed droplets, and the product may be continuously discharged outside the reactor.

According to an embodiment, a flame retardant manufactured by supplying at least one raw material of the metal alkyl hypophosphite and the divalent to tetravalent metal salt through a straight nozzle may satisfy the following Expressions 3 and 4.

$$\text{[Expression 3]}\ 0.1 < D_{50}/(D_{98}-D_{50}) < 0.3$$

$$\text{[Expression 4]}\ 250°C < T_{CG} < 280°C$$

When at least one raw material of the metal alkyl hypophosphite and the divalent to tetravalent metal salt is supplied through the straight nozzle, it is preferable that a nozzle conduit is formed vertically downward from the top of the straight nozzle. When the spray is directed to the wall of the reactor, the concentration at the moment of contact between the two raw materials varies, which is disadvantageous in obtaining a product having a uniform particle size.

The divalent to tetravalent metal salt may be supplied as a solution dissolved in water, and a concentration of the divalent to tetravalent metal salt may be 10 to 30 wt%, and more preferably 15 to 25 wt%.

In addition, when at least one raw material of the metal alkyl hypophosphite and the divalent to tetravalent metal salt is supplied through a straight nozzle, an area where the supplied raw material settles on a liquid surface containing the raw material in the reactor is not large; thus, it is easy to control the particle size so that the finally manufactured flame retardant satisfies Expression 3.

According to an embodiment, a hypophosphorous acid-based flame retardant satisfying the following Expressions 5 and 6 may be manufactured by supplying the raw material through a full cone nozzle or a fog nozzle.

$$\text{[Expression 5]}\ 0.35 < D_{50}/(D_{98}-D_{50}) < 0.6$$

$$\text{[Expression 6]}\ 290°C < T_{CG} < 320°C$$

When the raw material is supplied into the reactor through the full cone nozzle or the fog nozzle, as fine droplets are injected, the concentration at the moment of contact is extremely low, and a flame retardant having a large particle size is manufactured.

The divalent to tetravalent metal salt may be supplied as a solution dissolved in water in the same manner as when supplied through a straight nozzle, and the concentration may be applied in the same manner as when supplied through a straight nozzle.

In addition, water may be added in step b). When water is further added in step b), which is the reaction step, the filtration time may be reduced, the yield of the final product may be increased, and $T_{CG}$ of the final hypophosphorous acid-based flame retardant may be increased, thereby improving the heat resistance of the flame retardant.

The amount of water added in step b) may be 0.5 to 5.0 times and more preferably 0.9 to 3.5 times the weight of the obtained flame retardant, and it is advantageous in terms of the amount of water used and wastewater generation to ensure that the amount of water added in step b) does not exceed 4.0 times the weight of the obtained flame retardant.

In step c), the purity may be improved by washing the metal alkyl hypophosphite prepared in step b) with water to remove the impurities such as the initiator, the reaction by-product such as sodium sulfate ($Na_2SO_4$), and the unreacted raw materials. The water washing method is not particularly limited, and high purity may be achieved by performing washing two to four times with distilled water at room temperature.

The method for manufacturing a hypophosphorous acid-based flame retardant of the present invention includes d) drying the hypophosphorous acid-based metal salt washed with water in step c) under vacuum conditions to manufacture a hypophosphorous acid-based flame retardant represented by the following Chemical Formula 1.

The step of drying under vacuum conditions is a step of removing water used as a solvent during the reaction and water washing process, the vacuum drying method is not particularly limited, and drying under vacuum conditions of a temperature of 100 to 150°C and 1.0 mmHg or less is preferable because moisture in the hypophosphorous acid-based flame retardant may be completely removed to 1 wt% or less.

Still another aspect of the present invention relates to an adhesive composition containing the hypophosphorous

acid-based flame retardant described above and an adhesive polymer, wherein the hypophosphorous acid-based flame retardant satisfies the following Expression 3.

$$[Expression\ 3]\ 0.1 < D_{50}/(D_{98}-D_{50}) < 0.3$$

Examples of the adhesive polymer include, but are not limited to, polyethylene terephthalate, a vinyl acetatebased polymer, a vinyl chloride-based polymer, an epoxy-based polymer, a urethane-based polymer, a polyimide-based polymer, or an acrylate-based polymer.

The hypophosphorous acid-based flame retardant may be contained in an amount of 1 to 30 parts by weight, and specifically, 2 to 20 parts by weight, with respect to 100 parts by weight of the adhesive polymer, but is not limited thereto.

The hypophosphorous acid-based flame retardant satisfying Expression 3 is advantageous in that it improves the heat stability of the adhesive composition without impairing the physical properties of the adhesive composition even when contained with the controlled particle size in the adhesive composition so that it is suitable for an adhesive composition requiring thinness, that is, a composition for a copper clad laminate (CCL) or a flexible flat cable (FFC) in which a thickness of a coating layer is limited to 40 μm or less.

Specifically, the numerical range according to Expression 3 may be 0.15 to 0.3, and preferably 0.2 to 0.29.

The present invention may provide a flame retardant composition containing the hypophosphorous acid-based flame retardant described above and a resin, wherein the hypophosphorous acid-based flame retardant satisfies the following Expressions 5 and 6.

$$[Expression\ 5]\ 0.35 < D_{50}/(D_{98}-D_{50}) < 0.6$$

$$[Expression\ 6]\ 290^{\circ}C < T_{CG} < 320^{\circ}C$$

The hypophosphorous acid-based flame retardant satisfying Expressions 5 and 6 has a particle size that is controlled to be larger than that of the hypophosphorous acid-based flame retardant satisfying Expressions 3, and has high heat resistance, such that it may be mixed and used with a resin having a high decomposition temperature that requires high-temperature processing.

Specifically, the numerical range according to Expression 6 may be 0.38 to 0.6, preferably 0.45 to 0.6, and more preferably 0.47 to 0.58.

Specific examples of the resin having a high decomposition temperature include, but are not limited to, polybutylene terephthalate, polyethylene terephthalate, polyphthalamide, or nylon 6,6.

Hereinafter, the present invention will be described in detail with reference to a preparation example and examples. However, the following preparation examples and examples merely illustrate the present invention, and the scope of the present invention is not limited by the following preparation example and examples.

[Preparation Example] Synthesis of Sodium Diethylphosphinate (SDP)

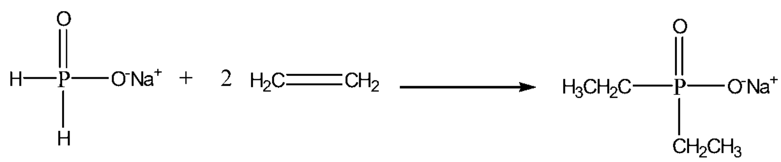

50 wt% of sodium hypophosphite (1,200 kg, 5,660.4 mol) was added to a 3,000 L high-pressure reactor equipped with a stirrer, ethylene was charged so that a pressure was 6 kg/cm$^2$ and then removed, and ethylene was charged again until the same pressure was reached to remove air in a gas phase. A valve was opened while connected to an ethylene storage tank so that the pressure was maintained during the reaction. Into a separately prepared 1,000 L container, 100 kg of ammonium persulfate (initiator) dissolved in 400 kg of water was continuously injected at a rate of about 20 L/h using a high-pressure plunger pump.

After 18 hours of the reaction at 70°C, ethylene was no longer consumed, and the reaction was terminated assuming that the ethylene substitution reaction was complete. 200 kg of a sample was collected and cooled to room temperature, and then, water was removed using a rotary evaporator. The sample obtained by filtering the precipitate was subjected to 600 MHz H-NMR analysis. The content of pure SDP in the reaction solution was 42.7 wt%.

FIG. 1 illustrates the results of H-NMR measurement of SDP prepared from the preparation example, and it was

confirmed that the reaction was entirely completed as the peak near 6 to 8 ppm corresponding to the P-H bond was almost invisible.

[Example 1]

1,892 kg (5.61 kmol) of the SDP solution prepared from the preparation example was injected into a 5 ton reactor, a temperature of the reactor was adjusted to 25°C, and then, 1,497 kg (1.03 kmol) of a 23.5 wt% aluminum sulfate aqueous solution was supplied from the top of the reactor for 50 minutes at a pressure of 3 $kg/cm^2$ and a flow rate of 30 l/min through a straight nozzle (Daewoo Nozzle, 1/8MCP31, 25 units) installed at an end of a 40 mm pipe connected to a pump. The resulting solution was maintained at 25°C for 60 minutes, and then transferred to a filter and filtered for 4 hours. The filtered solution was washed four times with 1,000 kg of distilled water at room temperature, and then vacuum dried under the conditions of 114°C/1.0 mmHg, thereby obtaining 715.1 kg of aluminum diethylphosphinate (ADP) (yield 97.9%). The obtained ADP was subjected to thermogravimetric analysis and particle size distribution measurement, and the results are summarized in Table 1.

[Example 2]

1,892 kg (5.61 kmol) of the SDP solution prepared from the preparation example was injected into a 5 ton reactor, a temperature of the reactor was adjusted to 25°C, and 1,497 kg (1.03 kmol) of a 23.5 wt% aluminum sulfate aqueous solution was supplied from the top of the reactor for 50 minutes through a full cone nozzle (Daewoo nozzle, 1/8R2.8W (11/8RR2.8W), 6 units, spray angle 120° per nozzle) installed at an end of a 40 mm pipe connected to a pump. The resulting solution was maintained at 25°C for 60 minutes, and then transferred to a filter and filtered for 4 hours. The water washing and drying processes were performed in the same manner as in Example 1 to obtain 715.1 kg of aluminum diethylphosphinate (ADP) (yield 98.1%). The obtained ADP was subjected to thermogravimetric analysis and particle size distribution measurement, and the results are summarized in Table 1.

[Example 3]

To a 200 L reactor filled with 100 kg of distilled water, 1,892 kg (5.61 kmol) of the SDP solution prepared from the preparation example and 1,497 kg (1.03 kmol) of a 23.5 wt% aluminum sulfate aqueous solution were simultaneously supplied from the top of the reactor for 50 minutes at a pressure of 3 $kg/cm^2$ and a flow rate of 30 l/min through 17 units of 1.6 mm straight downward nozzles installed at an end of a 40 mm inlet pipe connected to a pump. The reaction solution was continuously transferred to a filter through a transfer pipe connected to the top of the reactor. The transferred reaction solution was transferred to the filter and filtered for 5 hours. The water washing and drying processes were performed in the same manner as in Example 1 to obtain 714.4 kg of aluminum diethylphosphinate (ADP) (yield 98.0%). The obtained ADP was subjected to thermogravimetric analysis and particle size distribution measurement, and the results are summarized in Table 1.

[Example 4]

To a 200 L reactor filled with 150 kg of distilled water, 1,892 kg (5.61 kmol) of the SDP solution prepared from the preparation example and 1,497 kg (1.03 kmol) of a 23.5 wt% aluminum sulfate aqueous solution were supplied from the top of a reactor for 60 minutes at a pressure of 3 $kg/cm^2$ and a flow rate of 22.5 l/min through three sets of 25 units of 1.5 mm fog nozzles (Daewoo Nozzle, 1/4"Fog-Jet, spray angle of 60 to 70 per nozzle) installed at an end of a 40 mm inlet pipe connected to a pump. The resulting solution was maintained at 25°C for 60 minutes, and then transferred to a filter and filtered for 1 hour. The water washing and drying processes were performed in the same manner as in Example 1 to obtain 719.8 kg of aluminum diethylphosphinate (ADP) (yield 98.5%). The obtained ADP was subjected to thermogravimetric analysis and particle size distribution measurement, and the results are summarized in Table 1.

[Example 5]

Aluminum diethylphosphinate (ADP) was obtained in the same manner as in Example 1, except that the temperature of the reactor into which 1,892 kg (5.61 kmol) of the SDP solution prepared from the preparation example was injected was adjusted to 45°C and the solution was transferred to the filter and filtered for 15 hours. At this time, the yield was 97.5%, the obtained ADP was subjected to thermogravimetric analysis and particle size distribution measurement, and the results are summarized in Table 1.

[Example 6]

To a 200 L reactor filled with 100 kg of distilled water, 1,892 kg (5.61 kmol) of the SDP solution prepared from the preparation example and 1,497 kg (1.03 kmol) of a 23.5 wt% aluminum sulfate aqueous solution were supplied from the top of a reactor for 50 minutes at a pressure of 3 kg/cm$^2$ and a flow rate of 22.5 l/min through 17 units of 1.6 mm straight downward nozzles installed at an end of a 40 mm inlet pipe connected to a pump. Aluminum diethylphosphinate (ADP) was obtained with a yield of 98.0% in the same manner as in Example 3, except that the temperature was maintained at 45°C for 60 minutes. The obtained ADP was subjected to thermogravimetric analysis and particle size distribution measurement, and the results are summarized in Table 1.

[Example 7]

To a 200 L reactor filled with 150 kg of distilled water, 1,892 kg (5.61 kmol) of the SDP solution prepared from the preparation example and 1,497 kg (1.03 kmol) of a 23.5 wt% aluminum sulfate aqueous solution were supplied from the top of a reactor for 50 minutes at a pressure of 3 kg/cm$^2$ and a flow rate of 38 l/min through three sets of 25 units of 1.5 mm fog nozzles (Daewoo Nozzle, 1/4"Fog-Jet, spray angle of 60 to 70 per nozzle) installed at an end of a 40 mm inlet pipe connected to a pump. Aluminum diethylphosphinate (ADP) was obtained with a yield of 98.5% in the same manner as in Example 4, except that the reactor was maintained at 45°C. The obtained ADP was subjected to thermogravimetric analysis and particle size distribution measurement, and the results are summarized in Table 1.

[Example 8]

1,892 kg (5.61 kmol) of the SDP solution prepared from the preparation example was mixed with 730 kg of distilled water to adjust the concentration of the reaction solution and placed into a reactor, and aluminum diethylphosphinate (ADP) was obtained with a yield of 98.0% in the same manner as in Example 1, except that a temperature of the reactor was adjusted to 25°C, and 1,497 kg (1.03 kmol) of a 23.5 wt% aluminum sulfate aqueous solution was supplied from the top of the reactor for 50 minutes at a pressure of 3 kg/cm$^2$ and a flow rate of 38 l/min through a straight nozzle (Daewoo Nozzle, 1/8MCP31, 25 units) installed at an end of a 40 mm pipe connected to a pump. The obtained ADP was subjected to thermogravimetric analysis and particle size distribution measurement, and the results are summarized in Table 1.

[Example 9]

Aluminum diethylphosphinate (ADP) was obtained with a yield of 98.3% in the same manner as in Example 1, except that the concentration of the reaction solution was adjusted by mixing 2,190 kg of distilled water with 1,892 kg (5.61 kmol) of the SDP solution and filtering the reaction solution for 3 hours. The obtained ADP was subjected to thermogravimetric analysis and particle size distribution measurement, and the results are summarized in Table 1.

[Example 10]

Aluminum diethylphosphinate (ADP) was obtained with a yield of 98.7% in the same manner as in Example 2, except that the concentration of the reaction solution was adjusted by mixing 2,342 kg of distilled water with 1,892 kg (5.61 kmol) of the SDP solution and filtering the reaction solution for 2 hours. The obtained ADP was subjected to thermogravimetric analysis and particle size distribution measurement, and the results are summarized in Table 1.

[Table 1]

| Sample | Reaction type | Reaction temperature in step b) (°C) | Nozzle used | Filtration time (h) | Amount of water added (kg) | Yield (%) | $D_{50}$/ ($D_{98}$-$D_{50}$) | $T_{CG}$ (°C) |
|---|---|---|---|---|---|---|---|---|
| Example 1 | Batch | 25 | Straight nozzle | 4 | 0 | 97.9 | 0.21 | 265 |
| Example 2 | Batch | 25 | Full cone nozzle | 4 | 0 | 98.1 | 0.39 | 296 |
| Example 3 | Continuous | 25 | Straight nozzle | 5 | 0 | 98.0 | 0.28 | 275 |

(continued)

| Sample | Reaction type | Reaction temperature in step b) (°C) | Nozzle used | Filtration time (h) | Amount of water added (kg) | Yield (%) | $D_{50}$/ ($D_{98}$-$D_{50}$) | $T_{CG}$ (°C) |
|---|---|---|---|---|---|---|---|---|
| Example 4 | Continuous | 25 | Fog nozzle | 1 | 0 | 98.5 | 0.57 | 311 |
| Example 5 | Batch | 45 | Straight nozzle | 15 | 0 | 97.5 | 0.23 | 257 |
| Example 6 | Continuous | 45 | Straight nozzle | 5 | 0 | 98.0 | 0.28 | 274 |
| Example 7 | Continuous | 45 | Fog nozzle | 1 | 0 | 98.5 | 0.56 | 310 |
| Example 8 | Batch | 25 | Straight nozzle | 9 | 730 | 98.0 | 0.21 | 270 |
| Example 9 | Batch | 25 | Straight nozzle | 3 | 2,190 | 98.3 | 0.19 | 278 |
| Example 10 | Batch | 25 | Full cone nozzle | 2 | 2,342 | 98.7 | 0.48 | 307 |

As can be seen from Table 1, as the $D_{50}/(D_{98}-D_{50})$ value increases, the $T_{CG}$ (°C) increases, indicating improved heat resistance. In addition, when the same reaction temperature and the same type of nozzle are used, it may be seen that $T_{CG}$ (°C) of the hypophosphorous acid-based flame retardant manufactured by the continuous reaction is higher than that manufactured by the batch reaction.

When a divalent to tetravalent metal salt was supplied through a straight nozzle (Examples 1, 3, 5, 6, 8, and 9) in a batch or continuous reaction, small-sized particles having a value of $D_{50}/(D_{98}-D_{50})$ of more than 0.1 and less than 0.3, $D_{50}$ of 6 μm or less, and $D_{98}$ of 35 μm or less were produced.

When a divalent to tetravalent metal salt was supplied through a full cone nozzle (Examples 2 and 10) or a fog nozzle (Examples 4 and 7) in a batch or continuous reaction, large-sized particles having a value of $D_{50}/(D_{98}-D_{50})$ of more than 0.35 and less than 0.6, $D_{50}$ of 13 μm or less and less than 30 μm, and $D_{98}$ of 40 μm or more and 80 μm or less were produced.

In the batch reactions (comparison of Examples 1 and Examples 8 and 9) or the continuous reactions (comparison of Examples 2 and 10), when water was not further added into the reactor (Examples 1 and 2) and when water was further added (Examples 8, 9, and 10), the $T_{CG}$ (°C) value increased within the same range of $D_{50}/(D_{98}-D_{50})$, the filtration time shortened, and the reaction yield increased. In addition, since the $T_{CG}$ (°C) value increases as $D_{50}/(D_{98}-D_{50})$ increases, it may be seen that the productivity and heat resistance are improved by adding water in the reaction step.

When a fog nozzle was used in the continuous reaction (Examples 4 and 7), the $D_{50}/(D_{98}-D_{50})$ value, reaction yield (%), and $T_{CG}$ (°C) value were greater than those when a straight nozzle was used (Examples 3 and 6), indicating that the use of a fog nozzle in a continuous reaction is effective in terms of productivity and heat resistance of a hypophosphorous acid-based flame retardant.

## Claims

1. A hypophosphorous acid-based flame retardant satisfying the following Expressions 1 and 2 and represented by the following Chemical Formula 1:

[Expression 1]

$$0.1 < D_{50}/(D_{98}-D_{50}) < 0.6$$

[Expression 2]

$$250°C < T_{CG} < 320°C$$

[Chemical Formula 1]

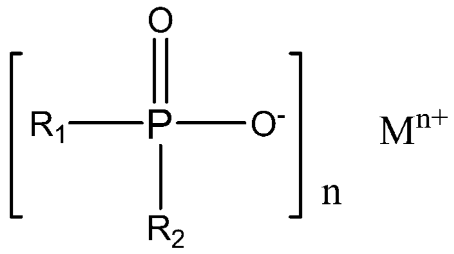

(in Expression 1, when measured by a laser diffraction scattering method, $D_{50}$ is a particle diameter corresponding to 50% of a cumulative volume of a particle size distribution, and $D_{98}$ is a particle diameter corresponding to 98% of the cumulative volume of the particle size distribution,
in Expression 2, $T_{CG}$ represents a temperature at which a weight loss of 1.0% appears first under thermogravimetric analysis conditions of a heating rate of 10°C/min and a nitrogen flow rate of 20 ml/min, and
in Chemical Formula 1, R1 and R2 are hydrogen or linear or branched ($C_1$-$C_6$) alkyl independently of each other, M is a metal atom of Ca, Mg, Al, Zn, or Ti, and n represents an integer selected from 2 to 4).

**2.** The hypophosphorous acid-based flame retardant of claim 1, wherein the hypophosphorous acid-based flame retardant satisfies the following Expression 3:

[Expression 3]

$$0.1 < D_{50}/(D_{98}-D_{50}) < 0.3$$

(in Expression 3, when measured by a laser diffraction scattering method, $D_{50}$ is a particle diameter corresponding to 50% of a cumulative volume of a particle size distribution, and $D_{98}$ is a particle diameter corresponding to 98% of the cumulative volume of the particle size distribution).

**3.** The hypophosphorous acid-based flame retardant of claim 1, wherein the hypophosphorous acid-based flame retardant satisfies the following Expressions 5 and 6:

[Expression 5]

$$0.35 < D_{50}/(D_{98}-D_{50}) < 0.6$$

[Expression 6]

$$290°C < T_{CG} < 320°C$$

(in Expression 5, when measured by a laser diffraction scattering method, $D_{50}$ is a particle diameter corresponding to 50% of a cumulative volume of a particle size distribution, and $D_{98}$ is a particle diameter corresponding to 98% of the cumulative volume of the particle size distribution, and
in Expression 6, $T_{CG}$ represents a temperature at which a weight loss of 1.0% appears first under thermogravimetric analysis conditions of a heating rate of 10°C/min and a nitrogen flow rate of 20 ml/min).

**4.** The hypophosphorous acid-based flame retardant of claim 1, wherein $D_{50}$ of the flame retardant is 30 μm or less.

**5.** The hypophosphorous acid-based flame retardant of claim 1, wherein $D_{98}$ of the flame retardant is 100 μm or less.

**6.** A method for manufacturing a hypophosphorous acid-based flame retardant, the method comprising:

a) preparing a metal alkyl hypophosphite by stirring an alkali metal hypophosphite, (C2-C4) alkene, a radical initiator, and water;
b) preparing a hypophosphorous acid-based metal salt by reacting the metal alkyl hypophosphite prepared in step a) with a divalent to tetravalent metal salt;
c) washing the hypophosphorous acid-based metal salt prepared in step b) with distilled water; and
d) drying the hypophosphorous acid-based metal salt washed with water in step c) under vacuum conditions to manufacture a hypophosphorous acid-based flame retardant represented by the following Chemical Formula 1,

wherein in step b), at least one raw material of the metal alkyl hypophosphite and the divalent to tetravalent metal salt is supplied through a nozzle:

[Chemical Formula 1]

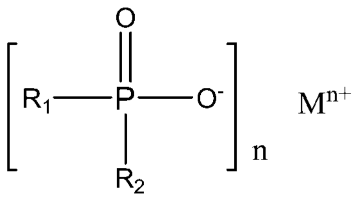

(in Chemical Formula 1, $R_1$ and $R_2$ are hydrogen or linear or branched ($C_1$-$C_6$) alkyl independently of each other, M is a metal atom of Ca, Mg, Al, Zn, or Ti, and n represents an integer selected from 2 to 4).

**7.** The method of claim 6, wherein the nozzle is a straight nozzle, a full cone nozzle, or a fog nozzle.

**8.** The method of claim 7, wherein the raw material is supplied through the straight nozzle, and the flame retardant satisfies the following Expression (3):

[Expression 3]

$$0.1 < D_{50}/(D_{98}-D_{50}) < 0.3$$

(in Expression 3, when measured by a laser diffraction scattering method, $D_{50}$ is a particle diameter corresponding to 50% of a cumulative volume of a particle size distribution, and $D_{98}$ is a particle diameter corresponding to 98% of the cumulative volume of the particle size distribution).

**9.** The method of claim 7, wherein the raw material is supplied through the full cone nozzle or the fog nozzle, and the flame retardant satisfies the following Expressions (5) and (6):

[Expression 5]

$$0.35 < D_{50}/(D_{98}-D_{50}) < 0.6$$

[Expression 6]

$$290°C < T_{CG} < 320°C$$

(in Expression 5, when measured by a laser diffraction scattering method, $D_{50}$ is a particle diameter corresponding to 50% of a cumulative volume of a particle size distribution, and $D_{98}$ is a particle diameter corresponding to 98% of the cumulative volume of the particle size distribution, and
in Expression 6, $T_{CG}$ represents a temperature at which a weight loss of 1.0% appears first under thermogravimetric analysis conditions of a heating rate of 10°C/min and a nitrogen flow rate of 20 ml/min.)

**10.** The method of claim 6, wherein the divalent to tetravalent metal salt is hydrochloride, sulfate, or nitrate of a divalent to

tetravalent metal.

**11.** The method of claim 6, wherein a reaction temperature in step b) is 60°C or lower.

**12.** An adhesive composition comprising the hypophosphorous acid-based flame retardant of any one of claims 1 to 5, and an adhesive polymer,

wherein the hypophosphorous acid-based flame retardant satisfies the following Expression 3:

[Expression 3]

$$0.1 < D_{50}/(D_{98}-D_{50}) < 0.3$$

(in Expression 3, when measured by a laser diffraction scattering method, $D_{50}$ is a particle diameter corresponding to 50% of a cumulative volume of a particle size distribution, and $D_{98}$ is a particle diameter corresponding to 98% of the cumulative volume of the particle size distribution).

**13.** The adhesive composition of claim 12, wherein the adhesive composition is used for a copper clad laminate (CCL) or a flexible flat cable (FFC).

**14.** A flame retardant composition comprising the hypophosphorous acid-based flame retardant of any one of claims 1 to 5, and a resin,

wherein the flame retardant satisfies the following Expressions 5 and 6:

[Expression 5]

$$0.35 < D_{50}/(D_{98}-D_{50}) < 0.6$$

[Expression 6]

$$290°C < T_{CG} < 320°C$$

in Expression 5, when measured by a laser diffraction scattering method, $D_{50}$ is a particle diameter corresponding to 50% of a cumulative volume of a particle size distribution, and $D_{98}$ is a particle diameter corresponding to 98% of the cumulative volume of the particle size distribution, and
in Expression 6, $T_{CG}$ represents a temperature at which a weight loss of 1.0% appears first under thermogravimetric analysis conditions of a heating rate of 10°C/min and a nitrogen flow rate of 20 ml/min.

**15.** The flame retardant composition of claim 14, wherein the resin is polybutylene terephthalate, polyethylene terephthalate, polyphthalamide, or nylon 6,6.

【FIG. 1】

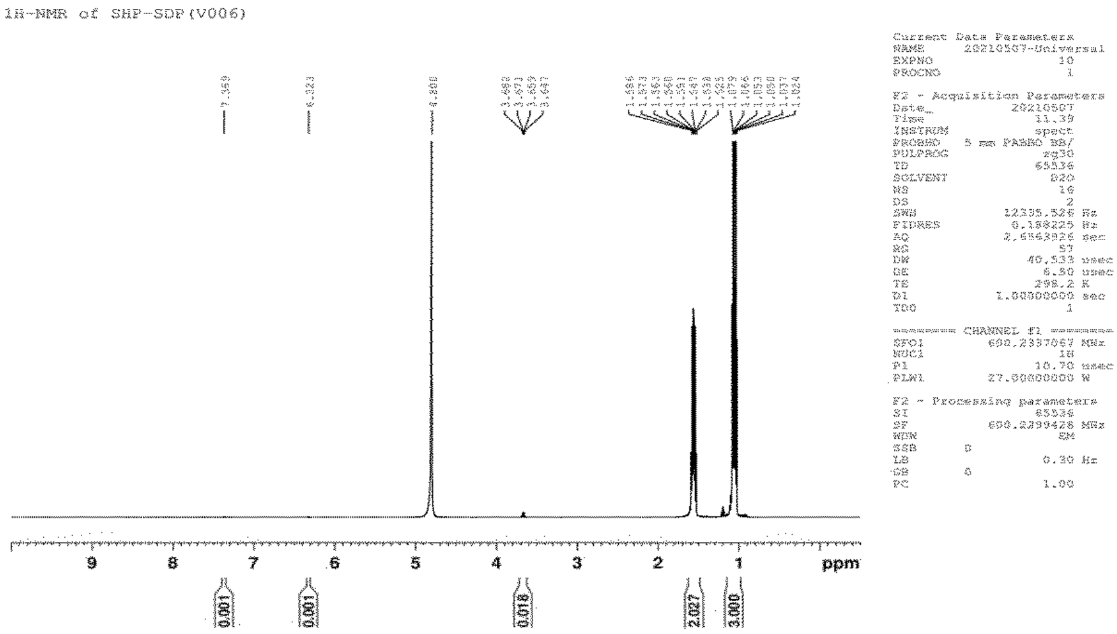
1H-NMR of SHP-SDP(V006)
7.359
6.323
4.800
3.683
3.671
3.659
3.647
1.586
1.573
1.563
1.560
1.551
1.547
1.538
1.065
1.079
1.066
1.053
1.050
1.037
1.024
9
8
7
6
5
4
3
2
1
ppm
0.001
0.001
0.018
2.027
3.000
Current Data Parameters
NAME 20210507-Universal
EXPNO 10
PROCNO 1
F2 - Acquisition Parameters
Date_ 20210507
Time 11.39
INSTRUM spect
PROBHD 5 mm PABBO BB/
PULPROG zg30
TD 65536
SOLVENT D2O
NS 16
DS 2
SWH 12335.526 Hz
FIDRES 0.188225 Hz
AQ 2.6563926 sec
RG 57
DW 40.533 usec
DE 6.50 usec
TE 298.2 K
D1 1.00000000 sec
TD0 1
CHANNEL f1
SFO1 600.2337067 MHz
NUC1 1H
P1 10.70 usec
PLW1 27.00000000 W
F2 - Processing parameters
SI 65536
SF 600.2299428 MHz
WDW EM
SSB 0
LB 0.30 Hz
GB 0
PC 1.00

【FIG. 2】

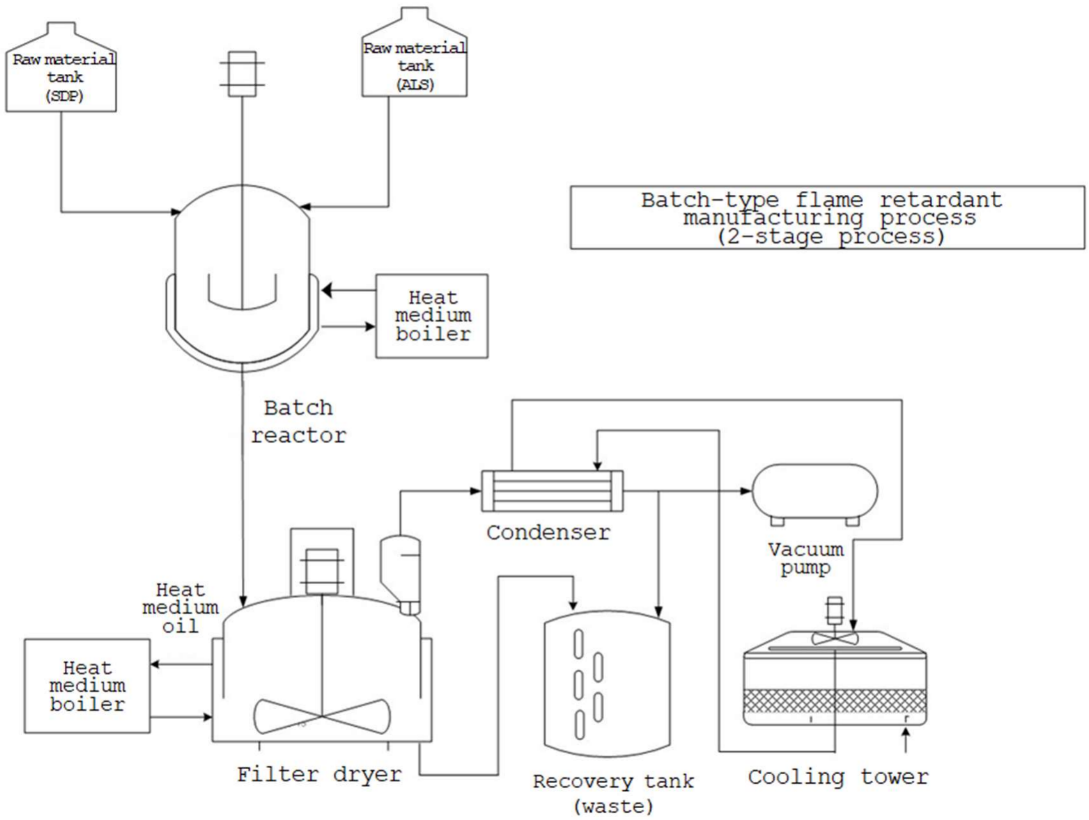
Raw material tank (SDP)
Raw material tank (ALS)
Batch-type flame retardant manufacturing process (2-stage process)
Heat medium boiler
Batch reactor
Condenser
Vacuum pump
Heat medium oil
Heat medium boiler
Filter dryer
Recovery tank (waste)
Cooling tower

【FIG. 3】

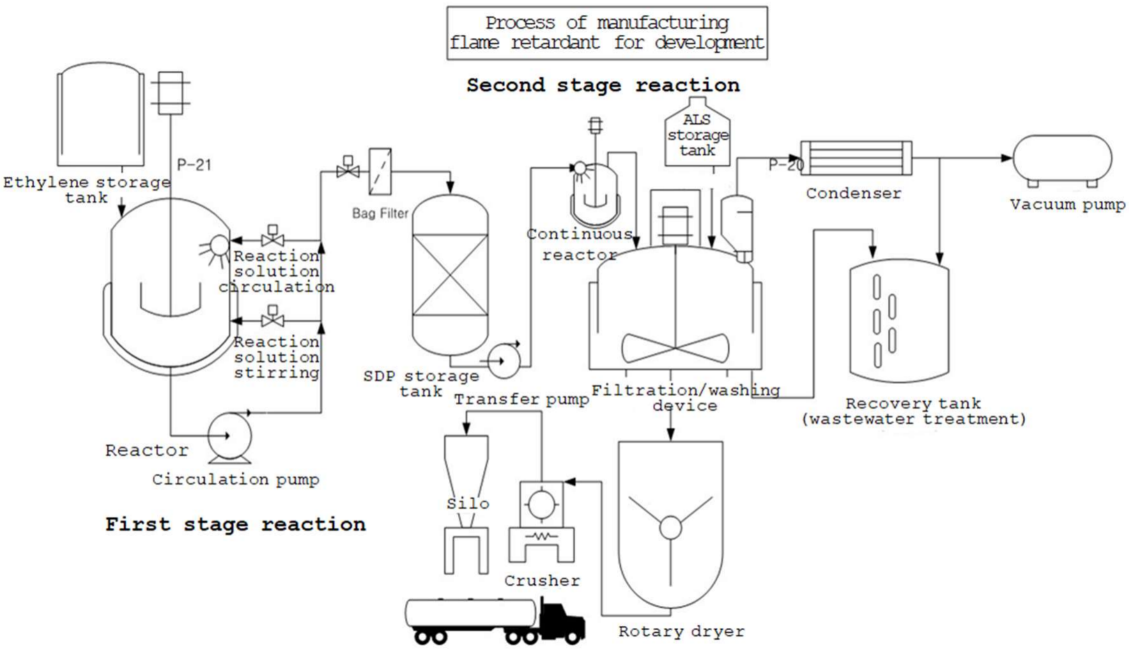
Process of manufacturing flame retardant for development
Second stage reaction
Ethylene storage tank
P-21
Reactor
Reaction solution circulation
Reaction solution stirring
Circulation pump
First stage reaction
Bag Filter
SDP storage tank
Continuous reactor
ALS storage tank
P-20
Condenser
Vacuum pump
Filtration/washing device
Recovery tank (wastewater treatment)
Transfer pump
Silo
Crusher
Rotary dryer

**INTERNATIONAL SEARCH REPORT**

International application No.
**PCT/KR2023/018080**

**A. CLASSIFICATION OF SUBJECT MATTER**

**C09K 21/12**(2006.01)i; **C08K 5/5313**(2006.01)i; **C08K 5/00**(2006.01)i; **C08L 67/02**(2006.01)i; **C08L 77/06**(2006.01)i; **C09J 11/06**(2006.01)i

According to International Patent Classification (IPC) or to both national classification and IPC

**B. FIELDS SEARCHED**

Minimum documentation searched (classification system followed by classification symbols)

C09K 21/12(2006.01); C07F 9/08(2006.01); C07F 9/30(2006.01); C08K 3/014(2018.01); C08K 3/016(2018.01); C08K 5/5313(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 알킬차아인산계 난연제(alkyl hypophosphorous acid-based flame retardant), 입도 조절(particle size control), 노즐(Nozzle)

**C. DOCUMENTS CONSIDERED TO BE RELEVANT**

| Category* | Citation of document, with indication, where appropriate, of the relevant passages | Relevant to claim No. |
|---|---|---|
| DX | KR 10-2019-0138003 A (KOREA INSTITUTE OF ENERGY RESEARCH et al.) 12 December 2019 (2019-12-12)<br>See abstract; claims 1, 2, 5, 7 and 9-11; paragraphs [0024], [0092]-[0094], [0096]-[0099] and [0102]; example 1; and tables 1-5. | 1-5,12-15 |
| DY | | 6-11 |
| DY | US 2005-0137418 A1 (BAUER, H. et al.) 23 June 2005 (2005-06-23)<br>See claims 1, 2 and 18; and paragraphs [0031] and [0104]. | 6-11 |
| A | KR 10-2020-0136177 A (UNIVERSAL CHEMTECH CO., LTD.) 07 December 2020 (2020-12-07)<br>See entire document. | 1-15 |
| A | CN 103172667 A (GUANGZHOU KINGSKY MATERIAL CO., LTD.) 26 June 2013 (2013-06-26)<br>See entire document. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 February 2024** | **13 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/018080**

**C. DOCUMENTS CONSIDERED TO BE RELEVANT**

| Category* | Citation of document, with indication, where appropriate, of the relevant passages | Relevant to claim No. |
|---|---|---|
| DA | KR 10-2019-0055821 A (CLARIANT PLASTICS & COATINGS LTD.) 23 May 2019 (2019-05-23)<br>See entire document. | 1-15 |

Form PCT/ISA/210 (second sheet) (July 2022)

**INTERNATIONAL SEARCH REPORT**
**Information on patent family members**

International application No.
**PCT/KR2023/018080**

| Patent document cited in search report | Publication date (day/month/year) | Patent family member(s) | Publication date (day/month/year) |
|---|---|---|---|
| KR 10-2019-0138003 A | 12 December 2019 | KR 10-2095283 B1 | 01 April 2020 |
| US 2005-0137418 A1 | 23 June 2005 | CN 100660858 A | 31 August 2005 |
| | | CN 100660858 B | 11 August 2010 |
| | | EP 1544205 A1 | 22 June 2005 |
| | | EP 1544205 B1 | 04 June 2008 |
| | | EP 1958950 A1 | 20 August 2008 |
| | | EP 1958950 A8 | 29 October 2008 |
| | | JP 2005-179362 A | 07 July 2005 |
| | | JP 2011-006436 A | 13 January 2011 |
| | | JP 4926399 B2 | 09 May 2012 |
| | | US 7635785 B2 | 22 December 2009 |
| KR 10-2020-0136177 A | 07 December 2020 | None | |
| CN 103172667 A | 26 June 2013 | CN 103172667 B | 30 March 2016 |
| KR 10-2019-0055821 A | 23 May 2019 | CN 107828084 A | 23 March 2018 |
| | | EP 3580271 A1 | 18 December 2019 |
| | | JP 2019-534346 A | 28 November 2019 |
| | | JP 7062001 B2 | 02 May 2022 |
| | | KR 10-2475946 B1 | 12 December 2022 |
| | | US 2019-0225773 A1 | 25 July 2019 |
| | | WO 2018-050497 A1 | 22 March 2018 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 102095283
- KR 1020190055821